# DEMANDE DE BREVET EUROPEEN

(11) **EP 0 533 541 A1**
(43) Date de publication de la demande: **24.03.1993**
(21) Numéro de dépôt: 92402496.1
(22) Date de dépôt: 11.09.1992
(51) Int. Cl.: F02M 37/10, B60K 15/077

(54) **Dispositif pour extraire du carburant du fond d'un réservoir déformable**

(30) Priorité: 12.09.1991 FR 9111264
(71) Demandeur: COMPAGNIE PLASTIC OMNIUM Société Anonyme dite:, F-69007 Lyon (FR)
(72) Inventeur: Dugand, Pascal, F-52000 Chaumont (FR); Bousselin, Geoffroy, F-60750 Choisy au Bac (FR)
(74) Mandataire: Leszczynski, André

(57) **Abrégé**

L'invention est relative à un dispositif pour extraire du carburant du fond d'un réservoir déformable, comportant une platine apte à être fixée de manière étanche sur le réservoir, ladite platine comportant une tubulure de départ de carburant, une tubulure de retour de carburant, un pied d'aspiration prenant appui sur le fond du réservoir.

Ladite tubulure de départ (24) est reliée à un ensemble d'extraction (27) par un tuyau déformable (13) comportant au moins une partie déformable en rotation et en allongement axial, en particulier avec un renflement hélicoïdal, s'adaptant au déplacement de l'ensemble d'extraction (27) résultant du déplacement du pied d'aspiration (26) s'appuyant contre le fond (29) du réservoir.

## Description

La présente invention a pour objet un dispositif pour extraire du carburant du fond d'un réservoir déformable, tel qu'un réservoir à carburant de véhicule automobile.

Les dispositifs de type connu pour extraire du carburant du fond d'un réservoir déformable comportent généralement une platine apte à être fixée de manière étanche sur le réservoir et comportant une tubulure de départ de carburant et une tubulure de retour de carburant ainsi qu'un pied d'aspiration prenant appui sur le fond du réservoir.

Du fait des déformations du réservoir dues notamment à des variations de température et de pression ainsi qu'à la charge de carburant, la position du pied d'aspiration est variable dans une certaine plage, de l'ordre de plusieurs centimètres. Pour appliquer constamment le pied d'aspiration sur le fond du réservoir, il est nécessaire d'exercer un appui élastique du pied d'aspiration contre le fond du réservoir et de permettre un coulissement vertical du pied par rapport à la platine.

Les dispositifs connus comportent à cet effet un pied d'aspiration pouvant coulisser verticalement coopérant avec un ressort de compression comprimé de l'ordre du centimètre par rapport à sa longueur libre. La tubulure de départ du carburant est reliée à un ensemble d'extraction par un tube en caoutchouc revêtu d'une tresse textile extérieure. Ce tube est peu flexible et de longueur importante correspondant à l'enroulement de ce tube sensiblement suivant un cercle de diamètre relativement important, les extrémités dudit tube étant dirigées respectivement vers la platine et le pied d'aspiration.

L'invention a pour but de remédier aux inconvénients précités en créant un dispositif d'encombrement plus faible, plus économique à fabriquer et à assembler.

Selon l'invention, le dispositif pour extraire du carburant du fond d'un réservoir déformable comporte une platine apte à être fixée de manière étanche sur le réservoir, ladite platine comportant une tubulure de départ de carburant, une tubulure de retour de carburant et un pied d'aspiration prenant appui sur le fond du réservoir et se caractérise par le fait que ladite tubulure de départ est reliée à un ensemble d'extraction par un tuyau déformable comportant au moins une partie déformable en rotation et en allongement axial, en particulier avec un renflement hélicoïdal s'adaptant au déplacement de l'ensemble d'extraction résultant du déplacement du pied d'aspiration s'appuyant contre le fond du réservoir.

Ainsi la déformation du renflement hélicoïdal permet une adaptation au mouvement de l'ensemble d'extraction, l'utilisation économique d'une très faible longueur de tuyau déformable et des coûts de montage réduits, tout en satisfaisant aux impératifs de fiabilité et de sécurité liés aux transfert de carburant.

Avantageusement, le dispositif selon l'invention comporte un tuyau déformable comportant au moins une partie avec un renflement hélicoïdal réalisée en une matière résistant à l'immersion permanente dans les hydrocarbures, par exemple une résine fluorée et préférentiellement du polytétrafluoroéthylène (PTFE).

L'invention sera mieux comprise en regard de la description qui va suivre donnée à titre d'exemple nullement limitatif au regard du dessin annexé dans lequel :
- la figure 1 est une vue schématique d'un dispositif d'extraction de carburant de l'art antérieur,
- la figure 2 est une vue schématique en perspective d'un tuyau déformable de l'art antérieur,
- la figure 3 est une vue schématique en perspective d'un tuyau déformable d'un dispositif d'extraction selon l'invention,
- la figure 4 est une vue schématique d'un dispositif d'extraction de carburant selon l'invention.

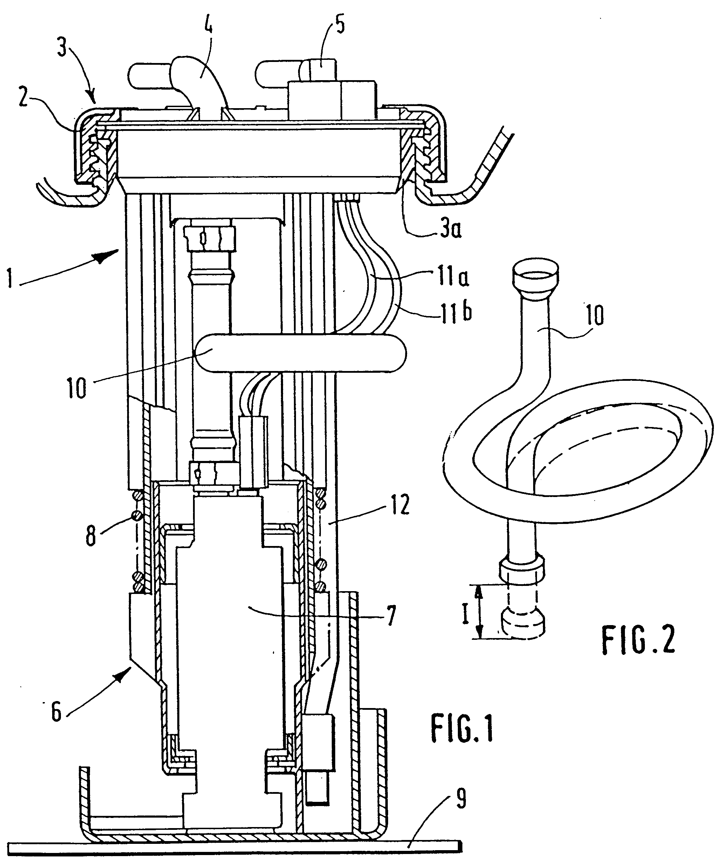

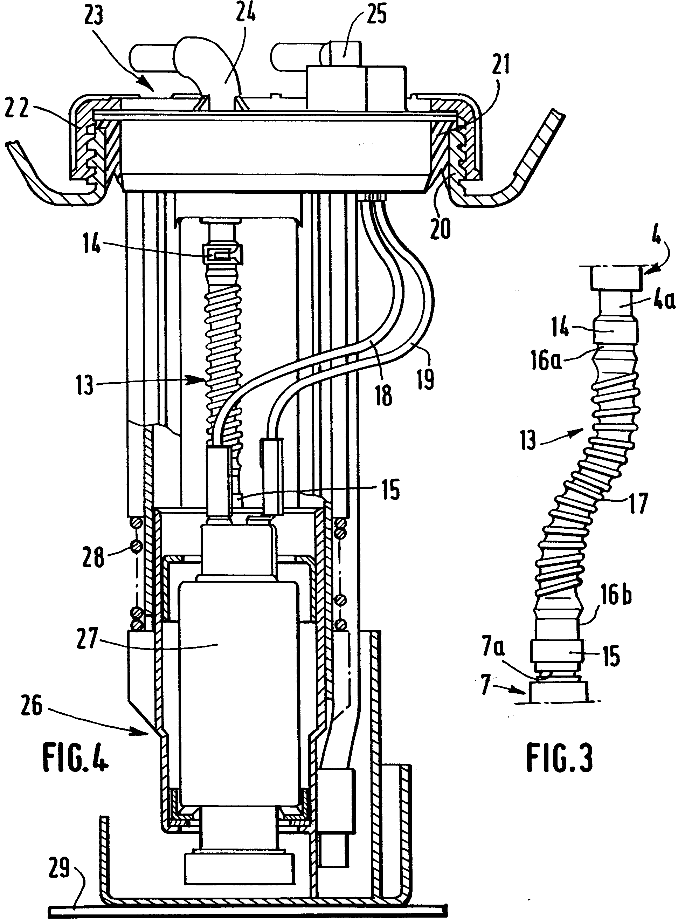

En référence à la figure 1, un dispositif d'extraction de carburant de l'art antérieur comporte une platine 1 apte à être fixée de manière étanche sur un réservoir de carburant. La platine comporte un rebord 2 sensiblement plan apte à être fixé par vissage d'un bouchon 3 sur le réservoir. Un joint 3a est serré entre la platine 1 et le réservoir pour assurer l'étanchéité.

La platine 1 comporte une tubulure 4 de départ de carburant ainsi qu'une tubulure 5 de retour de carburant.

Un pied d'aspiration 6 apte à coulisser verticalement comporte par exemple une pompe 7 dans le cas d'un moteur à essence, ou ne comporte aucune pompe dans le cas d'un moteur diesel. Le pied 6 est appliqué par un ressort hélicoïdal de compression 8, comprimé de plusieurs centimètres par rapport à l'état libre, contre le fond 9 du réservoir.

Un tube 10, par exemple en caoutchouc, revêtu d'une tresse textile, est relié au pied d'aspiration 6 d'une part ainsi qu'à la tubulure de départ 4 d'autre part pour permettre le passage du carburant.

Dans le cas d'un moteur à essence, la pompe 7 est de préférence alimentée électriquement par deux conducteurs 11a et 11b. La tubulure de retour 5 est prolongée par un tube 12 débouchant sensiblement au fond du réservoir de carburant.

En référence à la figure 2, on voit que le tube 10 reliant la tubulure de départ 4 au pied d'aspiration 6 est enroulé sensiblement suivant un cercle, de manière à permettre une déformation de ce tube relativement rigide et à un déplacement dans le sens vertical suivant un débattement fonction des variations de niveau du fond du réservoir.

En référence à la figure 3, le tuyau déformable 13 que comporte le dispositif selon l'invention est relié d'une part à la tubulure de départ 4 ainsi qu'à l'ensemble d'extraction 7 que constitue la pompe de carburant par emboîtement sur deux extrémités tubulaires 4a et 7a et un serrage au moyen de deux colliers 14 et 15 empêchant toute rotation relative par rapport aux extrémités tubulaires 4a et 7a.

Le tuyau déformable 13 comporte deux extrémités lisses 16a et 16b ainsi qu'une partie 17 comportant un renflement hélicoïdal s'étendant sur plus de la moitié de la distance séparant les tubulures 4a et 7a.

Selon les cahiers des charges usuels des constructeurs automobiles, le tuyau déformable de l'art antérieur ainsi que le tuyau déformable du dispositif selon l'invention sont soumis à des essais de fiabilité et de fatigue importants comportant notamment des accélérations jusqu'à 10 g, des essais à trois températures comprises entre -50°C et 100°C, des essais de tenue à l'arrachement des embouts par application de forces supérieures à 300 N et des essais statiques et dynamiques à des pressions pouvant aller jusqu'à 70 bar.

Jusqu'à présent, l'homme du métier utilisait les tuyaux déformables 10 de l'art antérieur de forme sensiblement cylindrique à paroi extérieure lisse. De nombreux essais ont été effectués avec diverses formes de tuyaux et aucun n'a permis de dégager de solution présentant des caractéristiques et une fiabilité identiques à celui de l'état de la technique connu.

On a constaté de manière surprenante que les renflements ou les cannelures hélicoïdales extérieures sur un tuyau relativement souple permettaient de résister à la fatigue tout en satisfaisant aux cahiers des charges des constructeurs automobiles.

Ceci peut s'expliquer a posteriori par le fait que, lorsque les extrémités 16a et 16b sont maintenues fixes, un tuyau de souplesse notable soumis à une pression intérieure de l'ordre de plusieurs bar, a une tendance aux pincements et à la formation de poches dans le cas d'un tuyau flexible circulaire, mais au contraire se déforme continûment à la manière d'une vis dans le cas d'un tuyau déformable 13 selon l'invention.

En référence à la figure 4, un dispositif d'extraction de carburant selon l'invention comporte une platine 23 munie d'une tubulure de départ 24 de carburant et d'une tubulure de retour 25 de carburant. Un pied d'aspiration 26 portant une pompe 27 d'extraction de carburant est appliqué par le ressort 28 contre le fond 29 du réservoir.

Conformément à l'invention, la tubulure 24 de départ de carburant est reliée à l'ensemble d'extraction que constitue la pompe 27 de carburant par un tuyau déformable 13 selon l'invention.

Selon l'invention, le tuyau déformable 13 comportant un renflement ou des cannelures hélicoïdales 17 sur plus de la moitié de sa longueur est immobilisé en rotation à ses extrémités par deux colliers 14 et 15.

La platine 23 est fixée de manière étanche sur le réservoir par vissage d'un bouchon 22 comprimant un joint d'extrémité 21 entre la platine 23 et le bord 20 d'un réservoir comportant un filetage.

Le transfert du carburant hors du réservoir étanche s'effectue par extraction grâce à la pompe 27 alimentée électriquement par les conducteurs 18 et 19.

Les dimensions des organes sont de préférence compatibles avec les dimensions des organes de l'art antérieur pour interchanger facilement le dispositif selon l'invention avec un dispositif de l'art antérieur.

## Revendications

1. Dispositif pour extraire du carburant du fond d'un réservoir déformable, comportant une platine apte à être fixée de manière étanche sur le réservoir, ladite platine comportant une tubulure de départ de carburant, une tubulure de retour de carburant, un pied d'aspiration prenant appui sur le fond du réservoir, caractérisé par le fait que ladite tubulure de départ (4,24) est reliée à un ensemble d'extraction (7,27) par un tuyau déformable (13) comportant au moins une partie (17) déformable en rotation et en allongement axial, en particulier avec un renflement hélicoïdal, s'adaptant au déplacement de l'ensemble d'extraction (7,27) résultant du déplacement du pied d'aspiration (6,26) s'appuyant contre le fond (9,29) du réservoir.

2. Dispositif selon la revendication 1, caractérisé par le fait que ledit tuyau déformable (13) est immobilisé en rotation à ses extrémités (16a,16b).

3. Dispositif selon l'une quelconque des revendications 1 ou 2, caractérisé par le fait que ledit tuyau déformable (13) est réalisé au moins partiellement en une résine fluorée résistant aux hydrocarbures, tel que du polytétrafluoroéthylène (PTFE).

4. Dispositif selon l'une quelconque des revendications 1 à 3, caractérisé par le fait que ledit tuyau déformable est emboîté à ses extrémités (16a,16b) respectivement sur la tubulure de départ de carburant (4,24) et une tubulure (7a) reliée à l'ensemble d'extraction (7,27).

5. Dispositif selon l'une quelconque des revendications 1 à 4, caractérisé par le fait que la partie (17) déformable en rotation et en allongement axial du tuyau déformable (13) s'étend sur au moins la moitié de la longueur dudit tuyau déformable (13).

6. Dispositif selon l'une quelconque des revendications 2 à 5, caractérisé par le fait que le tuyau déformable (13) est immobilisé en rotation par serrage de ses extrémités (16a,16b) au moyen de colliers (14,15)
